# EUROPEAN PATENT SPECIFICATION

(11) **EP 2 607 237 B1**
(45) Date of publication and mention of the grant of the patent: **05.10.2016**
(21) Application number: 11382398.3
(22) Date of filing: 23.12.2011
(51) Int. Cl.: B64D 39/06

(54) **Latching detection and indication system for aerial refueling couplings**
Verriegelungserkennungs- und -anzeigesystem für Kupplungen zur Luftbetankung
Système de détection et d'indication de verrouillage pour couplages de ravitaillement aérien

(43) Date of publication of application: 26.06.2013
(73) Proprietor: Airbus Defence and Space SA, 28906 Getafe Madrid (ES)
(72) Inventor: Marcos Montes, José Luis, 28906 Getafe (ES); Espinosa Sánchez, Martín, 28906 Getafe (ES); Terrón Blanco, Jorge, 28906 Getafe (ES); De la Fuente López, Samuel, 28906 Getafe (ES)
(74) Representative: Elzaburu Marquez, Alberto

(56) References cited:
- US-A- 2 634 926
- US-A- 2 692 102
- US-A- 2 938 688
- "KC-135 MPRS pod status lights"; "Annex ZA, appendix 3" In: "ATP 56(B) Air-to-air refuelling", 22 January 2010 (2010-01-22), NATO, XP002669822, vol. Part 5 * the whole document *

## Description

### FIELD OF THE INVENTION

The present invention relates generally to aircraft refueling hoses and more specifically to the latching system that ensures the connection to the probe to the reception coupling unit of the hose.

### BACKGROUND

One method for in-flight refueling operations is based on the use of a hose and drogue device that makes contact with a probe of the receiver aircraft allowing fuel to pass from the tanker aircraft to the receiver aircraft.

The drogue is used to stabilise the hose trailing from a fuel tanker aircraft. It also provides the drag to maintain the hose catenary and the mating force with a probe from a receiver aircraft to be refuelled. The drogue is attached to a reception coupling unit at the end of the hose, which has a passage for receiving the probe nozzle, and supports a canopy or parachute surrounding the passage opening and providing drag for the coupling unit.

The hose and drogue device may have illumination means as those disclosed in US 2009/0302161 to assist the receiver pilot to align the probe with the drogue and reception coupling passage in low light or darkness.

The connection between the probe and the reception coupling unit of the hose shall be ensured by a latching system.

US 2,692,102 and US 3,059,895 disclose a latching system based on some rollers which run on the receiver probe and which are allocated on a circumferential groove of the receiver probe when the full contact is performed. Those rollers are kept pressing the receiver probe by spring-plunger assemblies.

This latching system has the disadvantage that the connection between the probe and the hose reception coupling unit can be kept in an intermediate latching state, where the latching system is not in its locking position. At those conditions, the refuelling operation can be performed with relative movements between the hose reception coupling unit and the receiver probe.

The present invention is focused to the solution of this problem.

### SUMMARY OF THE INVENTION

It is an object of the present invention to provide a latching system for in-flight refuelling operations between a tanker aircraft and a receiver aircraft using a hose and drogue device that assures that the refuelling operation is performed without relative movements between the tanker reception coupling unit and the receiver probe.

In one aspect, this and another objects are met by a reception coupling unit of a hose and drogue device of a tanker aircraft with the probe of a receiver aircraft for in-flight refueling, the reception coupling unit and the probe comprising, respectively, first and second cooperating latching means that can be positioned in a non-latched state, in an intermediate latching state and in a latched state in the course of a refueling operation, the reception coupling unit comprising at least a detector of said latching states and at least a first indication means and/or a second indication means for providing, respectively, to the pilot of the receiver aircraft and/or to the crew of the tanker aircraft indications that said cooperating latching means are positioned in one or more of said latching states, said detector being operatively connected, respectively, to a first indication means and/or to a second indication means.

In one embodiment, said second cooperating means is a circumferential groove in the probe and said first cooperating means comprise at least a roller arranged in the reception coupling unit for running over the incoming probe, being then in an intermediate latching state the latching means, until they are allocated on said circumferential groove, being then in a latched state the latching means. Therefore latching detection means operatively connected to indication means for the pilot of the receiver aircraft and/or to the crew of the tanker aircraft are incorporated to known latching systems allowing the pilot of the receiver aircraft and/or the crew of the tanker aircraft to take the required corrective actions that lead to achieve a proper connection.

In one embodiment, the reception coupling unit comprises a detector for said roller which is operatively connected to a first indication means and/or to a second indication means for activating them when the roller is positioned in said intermediate latching state. A position detector shall be understood within the meaning of this invention as a sensing means, such as an optical sensing element or a mechanical sensing element capable of detecting the position of the roller in the intermediate latching state.

In one embodiment, said first indication means is a light source, preferably a Light Emitting Diode (LED) device, arranged in the external surface of the reception coupling unit connected to an electric circuit having a switch for turning ON/OFF said light source which is controlled by said detector which closes the circuit when the roller is in an intermediate latching state and open the circuit otherwise. A visual indication means of the intermediate latching state for the pilot of the receiver aircraft is therefore provided.

In one embodiment, said electric circuit comprises a flasher component so that said light source will emit a flashing light for a better understanding of its meaning.

In one embodiment, said second indication means is a signal emitter, preferably a radio emitter and particularly a micro-wave radio emitter, connected to an electric circuit having a switch for turning ON/OFF said signal emitter which is controlled by said detector. An indication means, preferably an acoustic indication means, of the intermediate latching state for the crew of the tanker aircraft is therefore provided.

In one embodiment, said electric circuit comprises an air-driven generator and a backup battery as electrical energy sources.

In one embodiment said first indication means is a sliding pin between a recessed and a protruding position with respect to the external surface of the reception coupling unit connected to a mechanical detector arranged to move the sliding pin to a protruding position when said roller is in an intermediate latching state and to a recessed position otherwise. A visual indication means of the intermediate latching state for the pilot of the receiver aircraft is therefore provided.

In one embodiment said mechanical detector is an assembly of a cam and a lever arranged for interacting with said roller to move the sliding pin to a protruding position in an intermediate latching state, so that it can be seen by the receptor pilot, and to a recessed position otherwise.

Other characteristics and advantages of the present invention will be clear from the following detailed description of embodiments illustrative of its object in relation to the attached figures.

### BRIEF DESCRIPTION OF DRAWINGS

Figure 1 is a schematic view of a refueling operation between a tanker aircraft and a receiver aircraft using a hose and drogue device.
Figure 2 is a cross section view of the reception coupling unit of a hose and drogue device.
Figures 3a, 3b and 3c are schematic cross sectional views of one embodiment of the latching detection and indication means according to the present invention in three different latching states and Figure 4 is a schematic view of the electric circuit included in this embodiment.
Figure 5 is a schematic cross sectional view of one embodiment of the latching detection and indication means of the intermediate latching state according to the present invention and Figure 6 is a schematic view of the electric circuit included in this embodiment.
Figure 7 is a schematic view of the electric circuit used in one embodiment of the latching detection and indication means according to the present invention
Figures 8a, 8b and 8c are schematic cross sectional views of one embodiment of the latching detection and indication means according to the present invention in three different latching states.

### DETAILED DESCRIPTION OF THE INVENTION

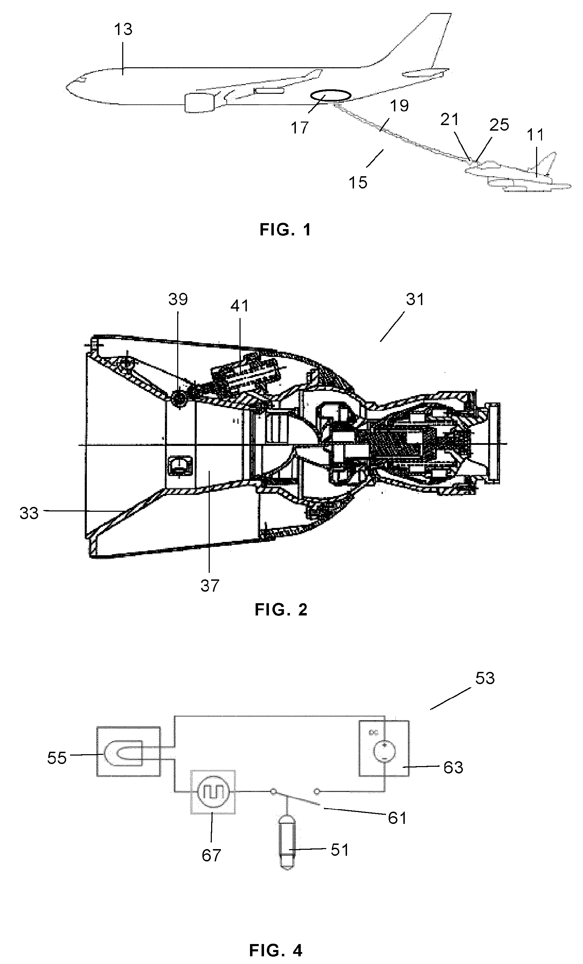

A usual method for in-flight refueling operations illustrated in Figure 1 is based on the use of a hose and drogue device 15. This refueling method employs a flexible hose 19 that trails from a refueling unit 17 (pod or FRU) located in the tanker aircraft 13 with a drogue 21 (a fitting resembling a windsock or shuttlecock) attached at its narrow end. The receiver 11 has a probe 25, which is a rigid arm placed on the aircraft's nose or fuselage with a valve that is closed until it mates with the end of the hose after which it opens and allows fuel to pass from the tanker aircraft 13 to the receiver aircraft 11.

Figure 2 shows the reception coupling unit 31 at the end of the hose 19 with an external surface 33 and an internal passage 37 for receiving the probe 25.

The reception coupling unit 31 and the probe 25 shall have cooperating latching means for assuring that the probe 25 is properly connected to the hose 19 to proceed with the refuelling operation.

According to this invention, the reception coupling unit 31 is also provided with detection and indication means of the latching state of said cooperating latching means so that the pilot of the receiver aircraft 11 and/or the crew of the tanker aircraft 13 can receive indications concerning said latching state.

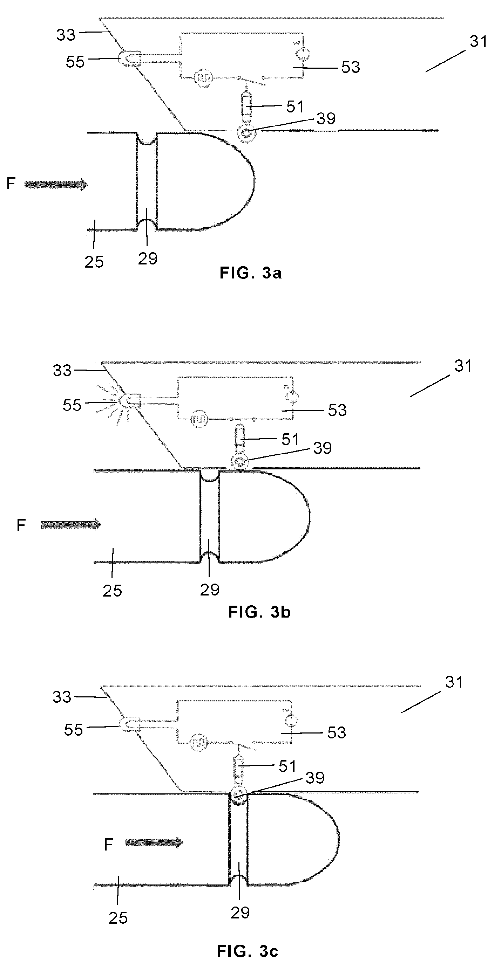

We will now describe some embodiments of the invention referred to a known latching system which is based on at least one roller 39 located in the internal passage 37 of the reception coupling unit 31, that is kept pressing the probe 25 by a spring-plunger assembly 41 (see Fig. 2), as the cooperating means in the reception coupling unit 31, and on a circumferential groove 29 as the cooperating means in the probe 25 (see Figures 3a, 3b, 3c).

In Figure 3a the roller 39 is at a fully extended position because it has not yet entered in contact with the probe 25. Arrow F indicates the direction of the displacement of the incoming probe 25 with respect to the reception coupling unit 31.

In Figure 3b the roller 39 is not at a fully extended position because it is pressed by the probe 25.

In Figure 3c the roller 39 is at a fully extended position because it is inserted into the circumferential groove 29 of the probe 25.

When the roller 39 is at the fully extended position, two possible latching states can them take place: the probe 25 is fully disconnected (Fig. 3a), i.e. a non-latching state, or it is properly connected (Fig. 3c), i.e. a latching state.

When the roller 39 is pressed by the probe 25 (Fig. 3b), an intermediate latching state takes place which means that the latching system is not locked.

In one embodiment of the invention, illustrated in Figures 3a, 3b, 3c, the reception coupling unit 31 is provided with detection and indication means of the intermediate latching state of said cooperating latching means so that the pilot of the receiver aircraft 11 can receive indications concerning said latching state.

The reception coupling unit 31 comprises position detectors 51, as detection means of the latching state of the roller 39, coupled to a switch 61 of an electric circuit 53.

The electric circuit 53 (see Figure 4) comprises an air-driven electric generator 63 and a backup battery (not shown) as electrical energy sources, a flasher component 67 and a source of light 55 placed in the external surface 33 of the reception coupling unit 31 as a first indication means of the intermediate latching state for the pilot of the receiver aircraft 11.

When the roller 39 is pressed by the probe 25 (Figure 3b), the position detector 51 closes the electric circuit 53 and the source of light 55 emit a flashing light advising the pilot of the receptor aircraft 11 of this circumstance so that he can take the required corrective actions that can lead to achieve a proper connection.

When the roller 39 is at the fully extended position (Figures 3a and 3c) the electric circuit 53 remains open so that the source of light 55 is turned OFF.

If the latching system has three rollers 39 spaced around the internal passage 37 of the reception coupling unit 21, as occurs in the above-mentioned known latching systems, this embodiment will comprise individual detection and indication means for each roller 39 and therefore the reception coupling unit 31 will be provided with three sources of light 55 as indications means for the pilot of the receptor aircraft 11 which will be spaced around the external surface 33 of the reception coupling unit 31 facilitating therefore that the pilot of the receptor aircraft 11 can be informed that the probe 25 is in an intermediate latching state in any position of the reception coupling unit 31.

Preferably the source of light 55 is a Light Emitting Diode (LED) device.

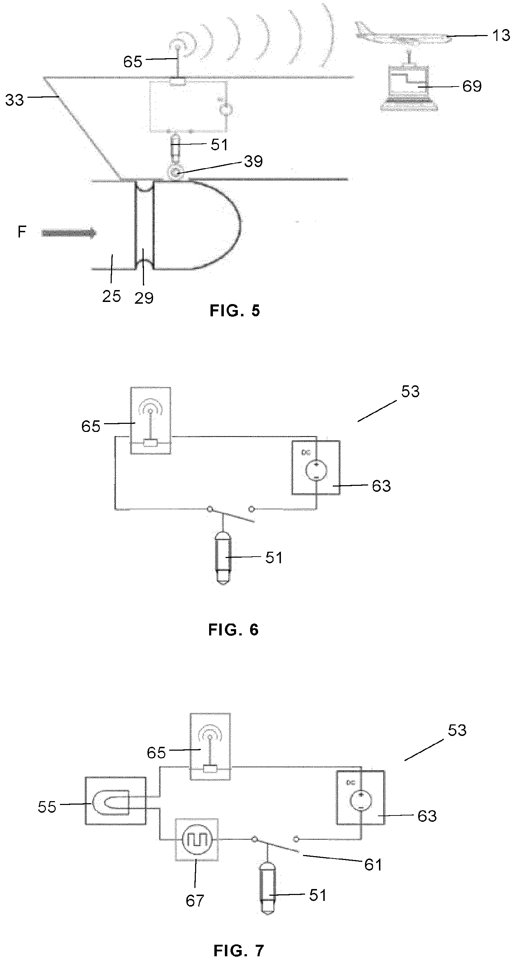

In another embodiment of the invention, illustrated in Figures 5 and 6, the reception coupling unit 31 is provided with detection and indication means of the intermediate latching state of said cooperating latching means so that the crew of the tanker aircraft 13 can receive indications concerning said intermediate latching state.

The reception coupling unit 31 comprises a position detector 51, as detection means of the latching state of the roller 39, coupled to a switch 61 of an electric circuit 53.

The electric circuit 53 (see Figure 6) comprises an air-driven electric generator 63 and a backup battery (not shown) as electrical energy sources, and a signal emitter 65 as a second indication means of the intermediate latching state for the crew of the tanker aircraft 13.

When the roller 39 is pressed by the probe 25 (see Figure 5), the position detector 51 closes the electric circuit 53 and the signal emitter 65 emit signals advising the crew of the tanker aircraft 13 of this circumstance so that they can take the required corrective actions that can lead to achieve a proper connection. The tanker aircraft 13 is provided with a suitable receptor device 69 of said signals.

Preferably the signal emitter 65 is a radio emitter, particularly a micro-wave radio emitter.

If the latching system has three rollers 39 spaced around the internal passage 37 of the reception coupling unit 21, as occurs in the above-mentioned known latching systems, this embodiment can comprise individual detection and indication means for each roller 39 and therefore the reception coupling unit 31 will be provided with three radio emitters as indications means for the crew of the tanker aircraft 13, or individual detection means for each roller 39 associated to a single indication means for the three rollers 39.

In another embodiment, the reception coupling unit 31 is provided with detection and indication means of the intermediate latching state of said cooperating latching means so that the pilot of the receiver aircraft 11 and the crew of the tanker aircraft 13 can receive indications concerning said latching state.

As in the above-mentioned embodiments the reception coupling unit 31 comprises a position detector 51, as detection means of the latching state of the roller 39, coupled to a switch 61 of an electric circuit 53.

The electric circuit 53 (see Figure 7) comprises an air-driven electric generator 63 and a backup battery as electrical energy sources, a flasher component 67, a source of light 55 placed in the external surface 33 of the reception coupling unit 31 as a first indication means of the intermediate latching state for the pilot of the receiver aircraft 11 and a signal emitter 65 as a second indication means of the intermediate latching state for the crew of the tanker aircraft.

When the position detector 51 closes the electric circuit 53, the source of light 55 emit flashing lights and the signal emitter 65 emit signals advising, respectively, the pilot of the receptor aircraft 11 and the crew of the tanker aircraft 13 that the latching system is in an intermediate latching state so that they can take the required corrective actions that can lead to achieve a proper connection.

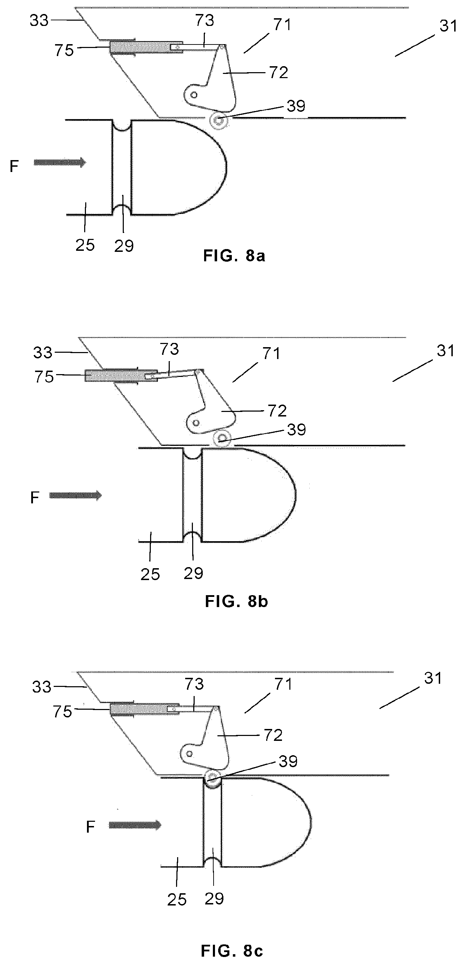

In another embodiment of the invention illustrated in Figures 8a, 8b, 8c the detector 71 of the latching state of the roller 39 is an assembly of a cam 72 and a lever 73. The lever 73 is arranged to move a pin 75, which is the first indication means for the pilot of the receiver aircraft 11, between a recessed and a protruding position with respect to the external surface 33 of the reception coupling unit 31.

When the roller 39 is pressed by the probe 25 (Figure 8b), the assembly of the cam 71 and the lever 73 moves the pin 75 to a protruding position making it therefore visible for the pilot of the receptor aircraft 11 so that he can take the required corrective actions that can lead to achieve a proper connection.

When the roller 39 is at the fully extended position (Figures 8a and 8c) the pin 75 remains in a recessed position.

Within the meaning of this invention the pin 75 shall be understood as a body suitable to be seen by the pilot of the receiver aircraft 11 on the external surface 33 of the reception coupling unit 31 in a refuelling operation.

This embodiment is advisable for coupling units 31 already provided with illumination means so that they can be fully operative at night or at poor weather conditions.

## Claims

1. Reception coupling unit (31) of a hose and drogue device (19, 21) of a tanker aircraft (13) comprising first latching means (39) configured to cooperate with second latching means (29) of a probe (25) of a receiver aircraft (11) for in-flight refueling, such that the first and second cooperating latching means (39, 29) can be positioned in a non-latched state, in an intermediate latching state and in a latched state in the course of a refueling operation, **characterized in that** the reception coupling unit (31) comprises at least a detector (51, 71) of said intermediate latching state and at least a first indication means (55, 75) and/or a second indication means (65) for providing, respectively, to the pilot of the receiver aircraft (11) and/or to the crew of the tanker aircraft (13) indications that said cooperating latching means (39, 29) are positioned in said intermediate latching state, said detector (51, 71) being operatively connected, respectively, to a first indication means (55, 75) and/or to a second indication means (65).

2. Reception coupling unit (31) according to claim 1, wherein said first cooperating latching means comprise at least one roller (39) arranged in the reception coupling unit (31) for running over an incoming probe (25), being then said latching means in an intermediate latching state, until the roller (39) is allocated on a circumferential groove (29) that constitutes the second cooperating latching means, being then said first and second cooperating latching means in a latched state.

3. Reception coupling unit (31) according to claim 2, comprising a detector (51) for said roller (39) which is operatively connected to a first indication means (55) and/or to a second indication means (65) for activating them when said roller (39) is positioned in said intermediate latching state.

4. Reception coupling unit (31) according to claim 3, wherein:
- said detector (51) is a position detector arranged for closing a switch (61) in an electric circuit (53) provided with an electrical energy source when said roller (39) is in an intermediate latching state and for opening said switch (61) otherwise;
- said first indication means (55) is a light source arranged in the external surface (33) of said reception coupling unit (31) and connected to said electric circuit (53);
- said second indication means (65) is a signal emitter connected to said electric circuit (53).

5. Reception coupling unit (31) according to claim 4, wherein said electric circuit (53) comprises as electrical energy sources an air-driven generator (63) and a backup battery.

6. Reception coupling unit (31) according to any of claims 4-5, wherein said electric circuit (53) further comprises a flasher component (67) so that said light source (55) will emit a flashing light when the electric circuit (53) is closed.

7. Reception coupling unit (31) according to claim 6, wherein said light source (55) is a LED device.

8. Reception coupling unit (31) according to any of claims 4-7, wherein said signal emitter (65) is a radio emitter.

9. Reception coupling unit (31) according to claim 8, wherein said radio emitter (65) is a micro-wave radio emitter.

10. Reception coupling unit (31) according to claim 4, wherein said signal emitter (65) is arranged as a single emitter when the reception coupling (31) comprises more than one roller (39).

11. Reception coupling unit (31) according to claim 2, comprising a detector (71) for said roller (39) which is operatively connected to a first indication means (75) for activating it when said roller (39) is positioned in said intermediate latching state.

12. Reception coupling unit (31) according to claim 11, wherein:
- the first indication means (75) is a sliding pin between a recessed and a protruding position with respect to the external surface (33) of the reception coupling unit (31);
- said detector (71) is a mechanical detector arranged to move the sliding pin (75) to a protruding position when said roller (39) is in an intermediate latching state and to a recessed position otherwise.

13. Reception coupling unit (31) according to claim 12, wherein said detector (71) is an assembly of a cam (72) and a lever (73) arranged for interacting with said roller (39) so that the lever (73), which is coupled to said sliding pin (75), move the sliding pin (75) to a protruding position when said roller (39) is in an intermediate latching state and to a recessed position otherwise.

14. Tanker aircraft comprising a hose and drogue device (19, 21) comprising a reception coupling unit (31) according to any of claims 1-13.

15. Tanker aircraft according to claim 14, comprising a receptor device (69) of the indications transmitted by said second indication means (65).

## Patentansprüche

1. Aufnahmekupplungseinheit (31) einer Schlauch- und Trichter-Vorrichtung (19, 21) eines Tankflugzeugs (13), die ein erstes Verriegelungsmittel (39) umfasst, das zum Zusammenwirken mit einem zweiten Verriegelungsmittel (29) einer Sonde (25) eines empfangenden Flugzeugs (11) für ein Auftanken in der Luft ausgebildet ist, so dass das erste und das zweite Verriegelungsmittel (39, 29), die zusammenwirken, im Verlauf eines Betankungsvorgangs in einem unverriegelten Zustand, in einem Zwischenverriegelungszustand und in einem verriegelten Zustand angeordnet werden können, **dadurch gekennzeichnet, dass** die Aufnahmekupplungseinheit (31) mindestens einen Detektor (51, 71) des Zwischenverriegelungszustands und mindestens ein erstes Anzeigemittel (55, 75) und/oder ein zweites Anzeigemittel (65) zum Bereitstellen von Anzeigen jeweils für den Piloten des empfangenden Flugzeugs (11) und/oder für die Besatzung des Tankflugzeugs (13) umfasst, dass die zusammenwirkenden Verriegelungsmittel (39, 29) in dem Zwischenverriegelungszustand angeordnet sind, wobei der Detektor (51, 71) jeweils mit einem ersten Anzeigemittel (55, 75) und/oder einem zweiten Anzeigemittel (65) funktionell verbunden ist.

2. Aufnahmekupplungseinheit (31) nach Anspruch 1, wobei das erste zusammenwirkende Verriegelungsmittel mindestens eine Rolle (39) umfasst, die in der Aufnahmekupplungseinheit (31) zum Laufen über eine hereinkommende Sonde (25) angeordnet ist, wobei es sich dann um das Verriegelungsmittel in einem Zwischenverriegelungszustand handelt, bis sich die Rolle (39) auf einer Umfangsrille (29) befindet, die das zweite zusammenwirkende Verriegelungsmittel bildet, wobei es sich dann um das erste und das zweite Verriegelungsmittel, die zusammenwirken, in einem verriegelten Zustand handelt.

3. Aufnahmekupplungseinheit (31) nach Anspruch 2, die einen Detektor (51) für die Rolle (39) umfasst, der funktionell mit einem ersten Anzeigemittel (55) und/oder einem zweiten Anzeigemittel (65) zum Aktivieren derselben verbunden ist, wenn die Rolle (39) in dem Zwischenverriegelungszustand angeordnet ist.

4. Aufnahmekupplungseinheit (31) nach Anspruch 3, wobei:
- der Detektor (51) ein Positionsdetektor ist, der zum Schließen eines Schalters (61) in einer elektrischen Schaltung (53), die mit einer elektrischen Energiequelle ausgestattet ist, wenn sich die Rolle (39) in einem Zwischenverriegelungszustand befindet, und ansonsten zum Öffnen des Schalters (61) angeordnet ist,
- wobei das erste Anzeigemittel (55) eine Lichtquelle ist, die in der Außenoberfläche (33) der Aufnahmekupplungseinheit (31) angeordnet und mit der elektrischen Schaltung (53) verbunden ist,
- wobei das zweite Anzeigemittel (65) ein Signalemitter ist, der mit der elektrischen Schaltung (53) verbunden ist.

5. Aufnahmekupplungseinheit (31) nach Anspruch 4, wobei die elektrische Schaltung (53) als elektrische Energiequelle einen von Luft angetriebenen Generator (63) und eine Unterstützungsbatterie umfasst.

6. Aufnahmekupplungseinheit (31) nach einem der Ansprüche 4 bis 5, wobei die elektrische Schaltung (53) ferner eine Blinklichtkomponente (67) umfasst, so dass die Lichtquelle (55) ein Blinklicht emittiert, wenn die elektrische Schaltung (53) geschlossen wird.

7. Aufnahmekupplungseinheit (31) nach Anspruch 6, wobei die Lichtquelle (55) eine LED-Vorrichtung ist.

8. Aufnahmekupplungseinheit (31) nach einem der Ansprüche 4 bis 7, wobei der Signalemitter (65) ein Funkemitter ist.

9. Aufnahmekupplungseinheit (31) nach Anspruch 8, wobei der Funkemitter (65) ein Mikrowellen-Funkemitter ist.

10. Aufnahmekupplungseinheit (31) nach Anspruch 4, wobei der Signalemitter (65) als ein einzelner Emitter angeordnet ist, wenn die Aufnahmekupplung (31) mehr als eine Rolle (39) umfasst.

11. Aufnahmekupplungseinheit (31) nach Anspruch 2, die einen Detektor (71) für die Rolle (39) umfasst, der funktionell mit einem ersten Anzeigemittel (75) zum Aktivieren desselben verbunden ist, wenn die Rolle (39) in dem Zwischenverriegelungszustand angeordnet ist.

12. Aufnahmekupplungseinheit (31) nach Anspruch 11, wobei:
- das erste Anzeigemittel (75) ein zwischen einer in Bezug auf die Außenoberfläche (33) der Aufnahmekupplungseinheit (31) zurückgezogenen und vorragenden Position gleitender Stift ist,
- der Detektor (71) ein mechanischer Detektor ist, der zum Bewegen des gleitenden Stifts (75) zu einer vorragenden Position, wenn sich die Rolle (39) in einem Zwischenverriegelungszustand befindet, und ansonsten zu einer zurückgezogenen Position angeordnet ist.

13. Aufnahmekupplungseinheit (31) nach Anspruch 12, wobei der Detektor (71) eine Anordnung einer Nocke (72) und eines Hebelarms (73) ist, die für eine Wechselwirkung mit der Rolle (39) angeordnet sind, so dass der Hebelarm (73), der mit dem gleitenden Stift (75) verbunden ist, den gleitenden Stift (75) zu einer vorragenden Position, wenn sich die Rolle (39) in einem Zwischenverriegelungszustand befindet, und ansonsten zu einer zurückgezogenen Position bewegt.

14. Tankflugzeug, das eine Schlauch- und Trichter-Vorrichtung (19, 21) umfasst, die eine Aufnahmekupplungseinheit (31) nach einem der Ansprüche 1 bis 13 umfasst.

15. Tankflugzeug nach Anspruch 14, das eine Empfangsvorrichtung (69) für die Anzeigen umfasst, die durch das zweite Anzeigemittel (65) übertragen werden.

## Revendications

1. Unité d'accouplement de réception (31) d'un dispositif à tuyau souple et panier (19, 21) d'un avion-citerne (13), comprenant des premiers moyens de verrouillage (39) configurés pour coopérer avec des seconds moyens de verrouillage (29) d'une perche (25) d'un avion récepteur (11) pour un ravitaillement en vol, de manière que les premiers et seconds moyens de verrouillage coopérants (39, 29) puissent être positionnés dans un état non verrouillé, dans un état de verrouillage intermédiaire et dans un état verrouillé au cours d'une opération de ravitaillement, **caractérisée en ce que** l'unité d'accouplement de réception (31) comprend au moins un détecteur (51, 71) dudit état de verrouillage intermédiaire et au moins un premier moyen d'indication (55, 75) et/ou un second moyen d'indication (65) pour fournir, respectivement au pilote de l'avion récepteur (11) et/ou à l'équipage de l'avion-citerne (13), des indications que lesdits moyens de verrouillage coopérants (39, 29) sont positionnés dans ledit état de verrouillage intermédiaire, ledit détecteur (51, 71) étant fonctionnellement relié, respectivement, à un premier moyen d'indication (55, 75) et/ou à un second moyen d'indication (65).

2. Unité d'accouplement de réception (31) selon la revendication 1, dans laquelle lesdits premiers moyens de verrouillage coopérants comprennent au moins un galet (39) agencé dans l'unité d'accouplement de réception (31) pour rouler sur une perche (25) qui arrive, lesdits moyens de verrouillage étant alors dans un état de verrouillage intermédiaire, jusqu'à ce que le galet (39) soit placé sur une rainure circonférentielle (29) qui constitue les seconds moyens de verrouillage coopérants, lesdits premiers et seconds moyens de verrouillage coopérants étant alors dans un état verrouillé.

3. Unité d'accouplement de réception (31) selon la revendication 2, comprenant un détecteur (51) pour ledit galet (39) qui est fonctionnellement relié à un premier moyen d'indication (55) et/ou à un second moyen d'indication (65) pour les activer lorsque ledit galet (39) est positionné dans ledit état de verrouillage intermédiaire.

4. Unité d'accouplement de réception (31) selon la revendication 3, dans laquelle :
- ledit détecteur (51) est un détecteur de position conçu pour fermer un interrupteur (61) dans un circuit électrique (53) pourvu d'une source d'énergie électrique lorsque ledit galet (39) est dans un état de verrouillage intermédiaire et pour ouvrir ledit interrupteur (61) dans le cas contraire ;
- ledit premier moyen d'indication (55) est une source de lumière agencée dans la surface externe (33) de ladite unité d'accouplement de réception (31) et connectée audit circuit électrique (53) ;
- ledit second moyen d'indication (65) est un émetteur de signal connecté audit circuit électrique (53).

5. Unité d'accouplement de réception (31) selon la revendication 4, dans laquelle ledit circuit électrique (53) comprend, comme sources d'énergie électrique, un alternateur à air dynamique (63) et une batterie de secours.

6. Unité d'accouplement de réception (31) selon l'une quelconque des revendications 4-5, dans laquelle ledit circuit électrique (53) comprend en outre un composant clignoteur (67) de sorte que ladite source de lumière (55) émettra une lumière clignotante quand le circuit électrique (53) est fermé.

7. Unité d'accouplement de réception (31) selon la revendication 6, dans laquelle ladite source de lumière (55) est un dispositif à diodes électroluminescentes.

8. Unité d'accouplement de réception (31) selon l'une quelconque des revendications 4-7, dans laquelle ledit émetteur de signal (65) est un émetteur radio.

9. Unité d'accouplement de réception (31) selon la revendication 8, dans laquelle ledit émetteur radio (65) est un émetteur radio hyperfréquence.

10. Unité d'accouplement de réception (31) selon la revendication 4, dans laquelle ledit émetteur de signal (65) est conçu sous la forme d'un seul émetteur quand l'unité d'accouplement de réception (31) comprend plus d'un seul galet (39).

11. Unité d'accouplement de réception (31) selon la revendication 2, comprenant un détecteur (71) pour ledit galet (39) qui est fonctionnellement relié à un premier moyen d'indication (75) pour l'activer lorsque ledit galet (39) est positionné dans ledit état de verrouillage intermédiaire.

12. Unité d'accouplement de réception (31) selon la revendication 11, dans laquelle :
- le premier moyen d'indication (75) est une broche coulissante entre des positions renfoncée et saillante par rapport à la surface externe (33) de l'unité d'accouplement de réception (31) ;
- ledit détecteur (71) est un détecteur mécanique conçu pour déplacer la broche coulissante (75) jusqu'à une position saillante lorsque ledit galet (39) est dans un état de verrouillage intermédiaire et jusqu'à une position renfoncée dans le cas contraire.

13. Unité d'accouplement de réception (31) selon la revendication 12, dans laquelle ledit détecteur (71) est un assemblage d'une came (72) et d'un levier (73) conçu pour interagir avec ledit galet (39) de manière que le levier (73), qui est accouplé à ladite broche coulissante (75), déplace la broche coulissante (75) jusqu'à une position saillante lorsque ledit galet (39) est dans un état de verrouillage intermédiaire et jusqu'à une position renfoncée dans le cas contraire.

14. Avion-citerne comprenant un dispositif à tuyau souple et panier (19, 21) comprenant une unité d'accouplement de réception (31) selon l'une quelconque des revendications 1-13.

15. Avion-citerne selon la revendication 14, comprenant un dispositif récepteur (69) des indications envoyées par ledit second moyen d'indication (65).
